# EUROPÄISCHE PATENTSCHRIFT

(11) **EP 2 300 252 B1**
(45) Veröffentlichungstag und Bekanntmachung des Hinweises auf die Patenterteilung: **08.02.2012**
(21) Anmeldenummer: 09760091.0
(22) Anmeldetag: 31.10.2009
(51) Int. Cl.: B60K 5/12

(54) **VORRICHTUNG ZUR ABSTÜTZUNG EINER BAUEINHEIT AN EINEM VERBRENNUNGSMOTOR**
DEVICE FOR SUPPORTING A STRUCTURAL UNIT ON AN INTERNAL COMBUSTION ENGINE
DISPOSITIF DE SOUTIEN D'UN MODULE SUR UN MOTEUR À COMBUSTION INTERNE

(30) Priorität: 10.11.2008 DE 102008056568
(43) Veröffentlichungstag der Anmeldung: 30.03.2011
(73) Patentinhaber: Voith Patent GmbH, 89522 Heidenheim (DE)
(72) Erfinder: WÖHRLE, Bernd, 89518 Heidenheim (DE)
(74) Vertreter: Dr. Weitzel & Partner
(86) Internationale Anmeldenummer: PCT/EP2009/007815
(87) Internationale Veröffentlichungsnummer: WO 2010/051950

(56) Entgegenhaltungen:
- WO-A-89/05246
- AT-B- 323 570
- CH-A- 178 298
- GB-A- 456 454
- US-A- 2 055 279

## Beschreibung

Die Erfindung betrifft eine Vorrichtung zur Abstützung einer direkt oder über wenigstens ein Zwischenelement an einem Verbrennungsmotor angeflanschten Baueinheit nach der im Oberbegriff von Anspruch 1 näher definierten Art.

Aus dem allgemeinen Stand der Technik ist es bekannt, Baueinheiten direkt oder indirekt an Verbrennungsmotoren, insbesondere beispielsweise an das Kürbelgehäuse eines Verbrennungsmotors, anzuflanschen. Ein praktisches Beispiel kann hier insbesondere ein Getriebe als Baueinheit sein, welches entweder unmittelbar am Kurbelgehäuses des Verbrennungsmotors angeflanscht wird, oder welches an einem Schwungradgehäuse angeflanscht wird, welches wiederum an dem Kurbelgehäuse des Verbrennungsmotors angeflanscht oder zumindest teilweise einstückig mit diesem ausgebildet sein kann. Die Aufnahme des Verbrennungsmotors beziehungsweise der Einheit aus Verbrennungsmotor und der beschriebenen Baueinheit erfolgt dann typischerweise wiederum über drei Punkte an einer entsprechenden Rahmenkonstruktion des Fahrzeugs. Die drei Aufnahmepunkte können dabei im Bereich des Verbrennungsmotors selbst angeordnet sein, oder teilweise auch im Bereich der Baueinheit. Ebenso ist es denkbar, die Aufnahmepunkte im Bereich eines Tragrahmens anzuordnen, welcher zur Aufhängung der Einheit aus Verbrennungsmotor und der beschriebenen Baueinheit dient.

Wenn es aus Festigkeitsgründen ausreichend ist, kann die Baueinheit über das Anflanschen direkt oder indirekt mit dem Verbrennungsmotor verbunden werden. Es kann jedoch aus anderen Gründen heraus sinnvoll und gewünscht sein, die Baueinheit an einem weiteren Punkt mitzulagern bzw. abzustützen, beispielsweise um zusätzliche Kräfte abzuleiten und insbesondere um das Schwingungsverhalten' zu beeinflussen, um damit zum Beispiel Geräuschemissionen zu verringern.

Da der Verbrennungsmotor beziehungsweise dessen Kurbelgehäuse und die Baueinheit sowie gegebenenfalls der Tragrahmen typischerweise aus verschiedenen Materialien bestehen und verschiedenen thermischen Einflüssen ausgesetzt sind, kann es im Bereich dieser Abstützung zu erheblichen Spannungen und Materialbelastungen kommen, welche insbesondere zu einem Versagen des Materials und der Bauteile führen können, oder welche nicht in der Lage sind, die an sie gerichteten Anforderungen hinsichtlich der mechanischen Aufnahme und des Schwingungsverhaltens wirksam zu gewährleisten.

Verschiedene Möglichkeiten einen Verbrennungsmotor flexibel aufzuhängen sind in der US 2,055,279 A beschrieben. Hierbei sind unterschiedliche Federelemente zur Aufhängung eines Getriebes beschrieben. Dabei weisen die Federelemente in unterschiedlichen Raumrichtungen unterschiedliche Steifigkeiten auf. Weitere ähnliche Aufbauten zur Aufhängung eines fest mit einem Verbrennungsmotor verbundenen Getriebes sind außerdem aus der CH 178298 bekannt. Ein Aufbau zur elastischen Aufhängung einer Motorgetriebeeinheit und zur Abstützung gegen die Schwerkraft ist außerdem aus der AT 323 570 bekannt. Letztlich beschreibt auch die gattungsbildende WO 89/05246 A1 einen vergleichbaren Aufbau.

Es ist daher die Aufgabe der hier vorliegenden Erfindung, eine Vorrichtung zur Abstützung einer solchen Baueinheit zu schaffen, welche die oben genannten Nachteile vermeidet und eine sichere und in ihrer Art gezielt beeinflussbare Abstützung der Baueinheit ermöglicht.

Erfindungsgemäß wird diese Aufgabe dadurch gelöst, dass die Abstützung der Baueinheit an einer zusätzlichen Stelle, zum Beispiel am Motor, einem Tragrahmen, dem Fahrzeugrahmen oder dergleichen, über ein geeignetes Verbindungsmittel erfolgt. Das Verbindungsmittel ist dabei wenigstens dreiteilig ausgebildet, wobei ein erstes Teil mit der Baueinheit verbunden ist, wobei ein zweites Teil mit der Verbrennungsmaschine oder dem Tragrahmen der Verbrennungsmaschine verbunden ist. Erfindungsgemäß sind dabei zwischen diesen beiden Teilelementen als drittes Teilelement Federmittel ausgebildet, die die Teilelemente so miteinander verbinden, dass das Verbindungsmittel in mindestens einer Raumrichtung eine höhere Steifigkeit aufweist, als in wenigstens einer anderen Raumrichtung.

Die Verbindung über das geeignete Federmittel, welches in ein oder zwei Raumrichtungen entsprechend steif ist, während es in zwei oder einer anderen Raumrichtung weniger steif ist, erfüllt die Anforderung eine derartige Abstützung ideal. Insbesondere kann die Steifigkeit dabei so gewählt werden, dass diese in Richtung der Schwerkraft eine höhere Steifigkeit aufweist und so das Gewicht der Baueinheit ideal abstützen kann. Mit der in eine oder beide anderen Raumrichtungen entsprechend konstruktiv einstellbaren Steifigkeit kann das Schwingungsverhalten entsprechend günstig beeinflusst werden, insbesondere indem Eigenfrequenzen der Schwingungen verschoben werden. Außerdem können unterschiedliche Längenausdehnungen, beispielsweise zwischen dem Tragrahmen und der Baueinheit besser ertragen werden, ohne hohe Spannungen in das Material der Baueinheit oder des Tragrahmens einzubringen.

Dabei ist das Federmittel als Blattfeder oder Stapel von Blattfedern ausgebildet, wobei die Blattfeder oder der Stapel von Blattfedern L-förmig ausgebildet ist.

Eine solche Blattfeder, welche um neunzig Grad gebogen ausgeführt ist, ermöglicht eine Übertragung von Kräften in einer Richtung, in welcher sie eine relativ hohe Steifigkeit aufweist. In den beiden anderen Richtungen der L-förmigen Schenkel verläuft jeweils einer der Schenkel senkrecht zur Raumrichtung, so dasshier eine entsprechend hohe Flexibilität gegeben ist. Eine L-förmige Blattfeder bzw. ein Stapel von L-förmigen Blattfedern ermöglicht somit eine Flexibilität in zwei Raumrichtungen während in der dritten Raumrichtung nach wie vor eine relativ hohe Steifigkeit vorliegt. Eine solche Blattfeder kann daher eingesetzt werden, wenn lediglich Gewichtskräfte abgestützt werden müssen, während unterschiedliche Ausdehnungen beziehungsweise das Schwingungsverhalten in den beiden anderen Richtungen beeinflusst werden soll.

Da Federn in Vielfältigerweise als Maschinenelemente oder Halbzeuge erhältlich sind, kann durch eine geeignete Wahl der Feder hinsichtlich ihrer Steifigkeit in verschiedenen Raumrichtungen eine ideale Anpassung an die auftretenden Relativbewegungen der Bauteile zueinander erfolgen. Der erfindungsgemäße Aufbau kann somit den konstruktiven Anforderungen an die Abstützung der Baueinheit mit einfachen, effizienten und kostengünstigen Mitteln gerecht werden.

Gemäß einer besonders günstigen Ausgestaltung der Erfindung ist die Baueinheit dabei ein Getriebe, insbesondere ein Automatgetriebe. In einer vorteilhaften Weiterbildung hiervon umfasst das Getriebe wenigstens ein hydrodynamisches Bauteil, insbesondere einen hydrodynamischen Wandler.

Bei einer derartigen Ausgestaltung der Baueinheit als Getriebe mit einem hydrodynamischen Wandler, also als typisches hydrodynamisch mechanisches Automatgetriebe, wie es in Nutzfahrzeugen häufig zum Einsatz kommt, kann die erfindungsgemäße Vorrichtung zur Aufnahme der Baueinheit ihre besonderen Vorteile ausspielen. Der hydrodynamische Wandler in dem Getriebe stellt üblicherweise eine eigene Wärmequelle dar, welche beispielsweise mittig oder an einem der Enden des Getriebes angeordnet ist. Durch diese Wärmequelle kommt es zu einer entsprechenden Einleitung von thermischer Energie, welche zu einer thermischen Ausdehnung des Materials des Gehäuses des Getriebes führt. Da die Ableitung der Wärme in die angrenzenden Bereiche üblicherweise sehr träge erfolgt, wird sich der Bereich zwischen dem Flansch an dem das Getriebe angeflanscht ist und der Abstützung über das Verbindungsmittel außerhalb des Getriebes, also beispielsweise im Tragrahmen, sicherlich nicht so stark ausdehnen, wie das Getriebe selbst. Verschärft wird dies, wenn verschiedene Materialien im Spiel sind, beispielsweise ein Getriebe aus Leichtmetallguss und ein Tragrahmen aus einem Stahlwerkstoff. Dementsprechend kommt es zu starken thermisch induzierten Spannungen infolge unterschiedlicher Materialausdehnungen zwischen dem Bereich an dem das Getriebe angeflanscht ist und dem Bereich der Abstützung. Durch die erfindungsgemäße Verwendung eines Verbindungsmittels mit Federelementen und einer gezielten Ausrichtung der Feder in die Richtung in der relative thermische Dehnungen auftreten können, können thermische Spannungen effizient minimiert werden.

In einer besonders günstigen Ausgestaltung der Erfindung ist der Verbrennungsmotor und die Baueinheit als gemeinsame Einheit aufgebaut, welche über drei Aufnahmepunkte mit einem Fahrzeug verbunden ist, wobei die Aufnahmepunkte am Verbrennungsmotor und an einem auf der Seite der Baueinheit fest mit dem Verbrennungsmotor verbundenen Tragrahmen angeordnet sind.

Dieser Aufbau mit seiner Dreipunktaufnahme am Verbrennungsmotor und an einem Tragrahmen ermöglicht eine statisch bestimmte Lagerung der Aufnahmepunkte für die Einheit aus Verbrennungsmotor und Baueinheit. Damit kann die Einheit ideal abgestützt und gelagert werden.

In einer besonders günstigen Variante dieser Ausführungsform stützt sich die Baueinheit dabei auf dem Tragrahmen ab.

Das Verbindungsmittel ist also zwischen der Baueinheit und dem Tragrahmen angeordnet, idealerweise in einem Bereich der Baueinheit, welcher dem Flansch mit dem diese direkt oder indirekt an den Verbrennungsmotor angeflanscht ist gegenüber und neben dessen Längsachse liegt. Damit kann eine sehr gute Abstützung der Gewichtskraft der Baueinheit erfolgen. Die Gewichtskraft wird dann unmittelbar in den Tragrahmen eingeleitet, welcher zusammen mit einem Aufnahmepunkte am Verbrennungsmotor die gesamte Einheit aus dem Verbrennungsmotor und der Baueinheit trägt. Somit kann eine gute Einleitung der Gewichtskräfte realisiert werden, ohne die Einheit mit unnötig hohen Biegemomenten zu belasten.

In einer besonders günstigen Ausführungsform der Erfindungen ist das erste Teilelement dabei mit der Baueinheit lösbar insbesondere durch eine Verschraubung verbunden. Diese ermöglicht eine einfache Demontage der Abstützung, so dass beispielsweise im Falle eines Getriebes dieses beispielsweise zu Wartungszwecken, sehr einfach demontiert werden kann.

In einer besonders günstigen Ausgestaltung der Erfindung kann es ferner vorgesehen sein, dass die Blattfeder bzw. die Blattfedern des Stapels von Blattfedern Ausnehmungen und/oder eingeprägte Sicken aufweisen.

Durch diese spezielle Ausgestaltung kann die Federsteifigkeit gezielt beeinflusst werden, indem durch die Ausnehmungen und/oder Sicken die Steifigkeit in bestimmten Raumrichtungen in der gewünschten Art und weise beeinflusst wird.

Weitere vorteilhafte Ausgestaltungen der Erfindung ergeben sich aus den restlichen Unteransprüchen und aus den Ausführungsbeispielen, welche nachfolgend anhand der Zeichnung näher dargestellt werden.

Dabei zeigen:
- Figur 1: eine Ansicht einer Motor-Getriebe-Einheit mit einem Tragrahmen;
- Figur 2: eine Seitenansicht des Tragrahmens und des Getriebes aus Fig. 1;
- Figur 3: eine Ausgestaltung eines Verbindungsmittels gemäß der Erfindung.

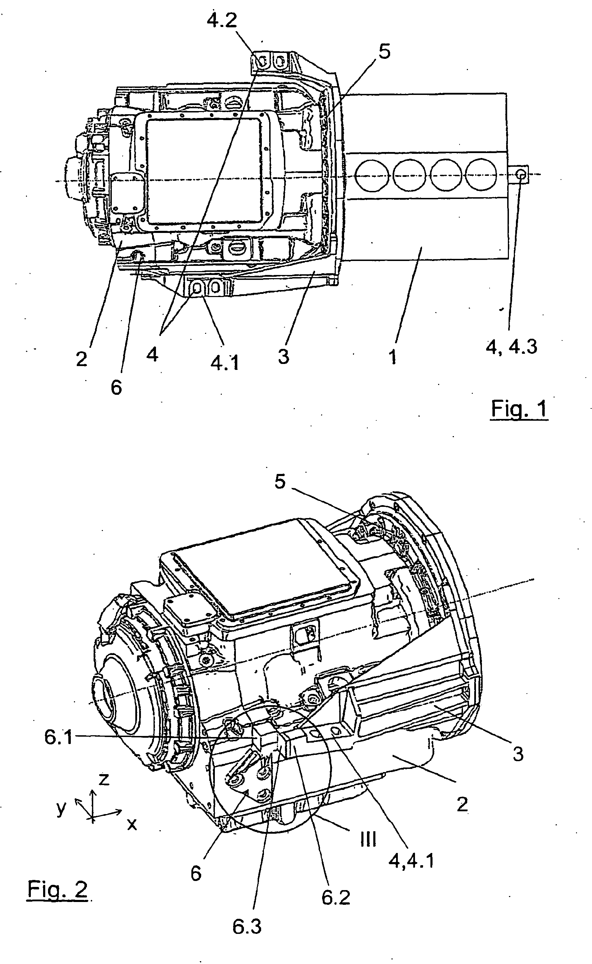

In Figur 1 ist ein Verbrennungsmotor 1 beispielhaft angedeutet. Der Verbrennungsmotor 1 ist mit einem an ihm angeflanschten Getriebe 2 als Baueinheit im Sinne der Erfindung versehen. Außerdem weist der Aufbau einen Tragrahmen 3 auf, welcher zur Aufnahme der Einheit aus Getriebe 2 und Verbrennungsmotor 1 an einem hier nicht dargestellten Rahmen eines Fahrzeuges dienen soll. Dafür weist der Tragrahmen 3 entsprechende Aufnahmepunkte 4 auf, in vorliegendem Fall zwei Aufnahmepunkte 4.1 und 4.2 welche mit jeweils zwei Bohrungen versehen sind um den Tragrahmen 3 über entsprechende Pufferelemente in üblicher Art und Weise mit dem nicht dargestellten Rahmen des Fahrzeugs zu verschrauben. Ein dritter Aufnahmepunkt 4 ist auf der dem Getriebe 2 abgewandten Seite des Verbrennungsmotors 1 als Aufnahmepunkt 4.3 exemplarisch angedeutet.

Durch den Aufbau des Verbrennungsmotors 1 mit seinem Aufnahmenpunkt 4.3 am Verbrennungsmotor 1 selbst und den Aufnahmepunkten 4.1 und 4.2 am Tragrahmen 3 auf der anderen Seite wird eine Abstützung der Einheit aus Getriebe 2 und Verbrennungsmotor 1 in dem Fahrzeug an drei Punkten erreicht, so dass eine definierte statisch bestimmte Lagerung der Motor-Getriebe-Einheit mit einem großen Abstand der Aufnahmepunkte 4.1, 4.2 und 4.3 realisiert ist.

Dieses Beispiel mit dem Getriebe 2 und dem Tragrahmen 3 ist dabei als bevorzugtes Ausführungsbeispiel zu sehen, ohne dass die Erfindung auf diese Bauform eingeschränkt ist. In Figur 2 ist nun in einer dreidimensionalen Seitenansicht das Getriebe 2 sowie der Tragrahmen 3 nochmals näher dargestellt. Das Getriebe 2 soll dabei als hydrodynamisch mechanisches Automatgetriebe ausgebildet sein, wobei auch diese Ausgestaltung rein beispielhaft zu verstehen ist.

Neben der Befestigung des Getriebes 2 über das Anflanschen im Bereich eines Flanschs 5 an dem Verbrennungsmotor 1 beziehungsweise typischerweise an einem Schwungradgehäuse, welches wiederum mit dem Verbrennungsmotor verbunden ist, erfolgt eine zusätzliche Abstützung des Getriebes 2 durch ein Verbindungsmittel 6 welches im Detail III näher dargestellt ist, und auf welches in der weiteren Beschreibung noch näher eingegangen wird. In der dreidimensionalen Darstellung der Figur 2 ist außerdem eine Darstellung der drei orthogonalen Raumrichtungen X, Y, Z zu erkennen. Entlang der strichpunktiert eingezeichneten Längsachse des Getriebes 2 beziehungsweise der Motor-Getriebe-Einheit verläuft dabei die mit X bezeichnete Raumrichtung. Quer dazu verlaufen die beiden senkrecht aufeinander stehenden Raumrichtungen Y und Z, wobei Z die Raumrichtung in Richtung der Schwerkraft symbolisieren soll, sofern sich die Motor-Getriebe-Einheit beziehungsweise das Getriebe 2 in seiner bestimmungsgemäßen Einbaulage befindet, wie dies in Figur 2 dargestellt ist.

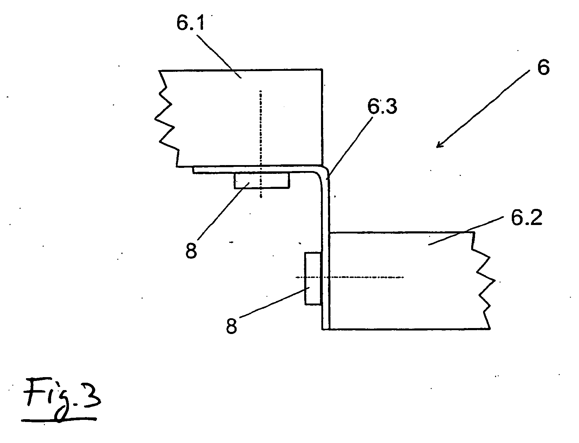

Das Verbindungsmittel 6 besteht im Wesentlichen aus drei Teilelementen 6.1, 6.2, 6.3, welche in dem mit III bezeichneten Bereich näher dargestellt sind. Diese Teilelemente 6.1, 6.2, 6.3, werden auch in der folgenden Figur 3 nochmals näher erläutert. Im Wesentlichen ist das erste Teilelement 6.1 mit dem Getriebe 2 beziehungsweise dessen Gehäuse verbunden. Dies kann bevorzugt über eine lösbare Verbindung, beispielsweise durch Verschrauben erfolgen. Das zweite Teilelement 6.2 ist im vorliegenden Ausführungsbeispiel einstückig mit dem Tragrahmen 3 ausgebildet. Diese Ausgestaltung von lösbaren und einstückigen Verwindungen könnten dabei auch andersherum gewählt werden, oder es könnten beide Teilelemente 6.1 und 6.2 jeweils einstückig mit dem Tragrahmen 3 bzw. mit dem Getriebe 2 ausgebildet sein, oder es könnten auch beide Teilelemente 6.1 und 6.2 entsprechend lösbar mit dem Getriebe 2 bzw. dem Tragrahmen 3 verbunden sein. Die zuerst genannte Ausgestaltung weist jedoch den Vorteil auf, dass diese bei einer eventuellen Demontage des Getriebes 2 am einfachsten zu handhaben ist.

Das Teilelement 6.3 ist als Federmittel ausgebildet, welches die beiden Teilelemente 6.1 und 6.2 so verbindet, dass diese Verbindung in wenigstens einer Raumrichtung, hier in den Raumrichtungen Z und Y eine hohe Steifigkeit aufweist, während sie in wenigstens einer anderen Raumrichtung, hier in der Raumrichtung X also parallel zu Längsachse des Getriebes 2, eine entsprechende Flexibilität ausweist.

In Figur 3 ist dieser Aufbau nochmals im Detail dargestellt. Hierbei sind nur die Teilelemente 6.1 und 6.2 sowie das sie verbindende Federmittel 6.3 dargestellt. Das Federmittel ist in diesem Fall als L-formige Blattfeder ausgebildet, es könnte jedoch auch einen Stapel von Blattfedern, beispielsweise zwei, drei oder mehr übereinander gestapelte Blattfedern umfassen. Die Blattfeder 6.3 ist in dem dargestellten Ausführungsbeispiel über Druckplatten 7 und Schraubenmittel 8 mit dem jeweiligen Teilelement 6.1 beziehungsweise 6.2 verschraubt.

Diese Ausgestaltung als L-förmiges Federmittel 6.3 mit zwei Armen, welche in X- und Y- Richtung verlaufen, ermöglicht es dem Federmittel nicht nur in eine sondern in zwei Raumrichtungen, nämlich in die Richtung X und Y, eine hohe Flexibilität aufzuweisen, während in Richtung der Schwerkraft Z bei bestimmungsgemäßer Verwendung weiterhin eine sehr hohe Steifigkeit vorliegt. Dieser Aufbau erlaubt es damit nicht nur in Längsrichtung der Motor-Getriebe-Einheit unterschiedliche Ausdehnungen und Verschiebungen der Bauteile zueinander auszugleichen, sondern erlaubt es auch in Y-Richtung einen derartigen Ausgleich zu gewährleisten. Dies kann insbesondere dann von Vorteil sein, wenn das Bauteil in Y-Richtung hinsichtlich der Schwingungen beeinflusst werden soll. Durch die Anordnung in Figur 3 und die Ausgestaltung als Stapel von Blattfedern kann wiederum durch die Reibung zwischen den einzelnen Federn des Stapels eine entsprechende Dämpfung der Schwingungen im begrenzten Maße erfolgen, da auch hier die einzelnen Federn des Stapels von Blattfedern sich gegeneinander geringfügig bewegen können und durch die dabei entstehende Reibung diese begrenzte Dämpfung verursachen.

Die dargestellten Ausführungsbeispiele zeigen also, dass mit sehr einfachen Mitteln eine sehr hohe Gestaltungsfreiheit erreicht wird, welche eine entsprechende Abstützungen einer an dem Verbrennungsmotor 1 angeflanschten Baueinheit, hier eines Getriebes 2, ermöglichen, ohne die benötigte Flexibilität bei unterschiedlichen thermischen Ausdehnungen oder sonstigen minimalen Relativbewegungen der Bauteile zueinander negativ zu beeinflussen. Damit lassen sich unnötige Biegemomente in der Einheit aus dem Verbrennungsmotor 1 und der Baueinheit 2 mit einfachen Mitteln kostengünstig minimieren.

## Patentansprüche

1. Vorrichtung zur
1.1 Abstützung einer direkt oder über wenigstens ein Zwischenelement an einem Verbrennungsmotor (1) angeflanschten Baueinheit, (2) wobei
1.2 die Abstützung der Baueinheit (2) an wenigstens einer Stelle mittels eines Verbindungsmittels (6) erfolgt; wobei
1.3 das Verbindungsmittel (6) aus wenigstens drei Teilelementen (6.1, 6.2, 6.3) besteht, wobei
1.4 ein erstes Teilelement (6.1) mit der Baueinheit (2) verbunden ist, wobei
1.5 ein zweites Teilelement (6.2) mit dem Verbrennungsmotor (1) oder einem Tragrahmen (3) des Verbrennungsmotors (1) verbunden ist, und wobei
1.6 die beiden Teilelemente (6.1, 6.2) durch ein drittes als Federmittel ausgebildetes Teilelement (6.3) so miteinander verbunden sind, dass das Verbindungsmittel (6) in wenigstens einer Raumrichtung eine höhere Steifigkeit aufweist als in wenigstens einer anderen Raumrichtung,
1.7 **dadurch gekennzeichnet, dass** das Federmittel (6.3) als Blattfeder oder Stapel von Blattfedern ausgebildet ist, wobei
1.8 die Blattfeder (6.3) oder der Stapel von Blattfedern L-förmig ausgebildet ist.

2. Vorrichtung nach Anspruch 1, **dadurch gekennzeichnet, dass** die Baueinheit als ein Getriebe (2), insbesondere ein Automatgetriebe, ausgebildet ist.

3. Vorrichtung nach Anspruch 2, **dadurch gekennzeichnet, dass** das Getriebe (2) wenigstens ein hydrodynamisches Bauteil, insbesondere einen hydrodynamischen Wandler, aufweist.

4. Vorrichtung nach Anspruch 1, 2 oder 3, **dadurch gekennzeichnet, dass** die Baueinheit (2) über ein Schwungradgehäuse an den Verbrennungsmotor (1) angeflanscht ist.

5. Vorrichtung nach einem der Ansprüche 1 bis 4, dadurch gekenntzeichnet, dass der Verbrennungsmotor (1) und die Baueinheit (2) als gemeinsame Einheit über drei Aufnahmepunkte (4.1, 4.2, 4.3) mit einem Rahmen eines Fahrzeugs verbunden sind, wobei die Aufnahmepunkte (4.1, 4.2, 4.3) am Verbrennungsmotor (1) und einem auf der Seite der Baueinheit (2) fest mit dem Verbrennungsmotor (1) verbundenen Tragrahmen (3) angeordnet sind.

6. Vorrichtung nach Anspruch 5, **dadurch gekennzeichnet, dass** das Verbindungsmittel (6) die Baueinheit (2) an dem Tragrahmen (3) abstützt.

7. Vorrichtung nach einem der Ansprüche 1 bis 6, **dadurch gekennzeichnet, dass** das erste Teilelement (6.1) mit dem der Baueinheit (2) lösbar, insbesondere durch eine Verschraubung verbunden ist.

8. Vorrichtung nach einem der Ansprüche 1 bis 7, **dadurch gekennzeichnet, dass** das zweite Teilelement (6.2) einstückig mit dem Tragrahmen (3) ausgebildet ist.

9. Vorrichtung nach einem der Ansprüche 1 bis 8, **dadurch gekennzeichnet, dass** das Federmittel (6.3) mit dem ersten Teilelement (6.1) und dem zweiten Teilelement (6.2) jeweils verschraubt ist.

10. Vorrichtung nach einem der 1 bis 9 Ansprüche **dadurch gekennzeichnet, dass** die senkrecht zur Längsrichtung (X) verlaufende Richtung (Y), in der die Blattfeder (6.3) oder der Stapel von Blattfedern flexibel ist, senkrecht zur Richtung (Z) der Schwerkraft bei bestimmungsgemäßen Gebrauch ausgebildet ist.

11. Vorrichtungen nach einem der Ansprüche 1 bis 10, **dadurch gekennzeichnet, dass** die Blattfeder (6.3) oder der Stapel von Blattfedern Ausnehmungen und/oder eingeprägte Sicken ausweist.

## Claims

1. An apparatus for
1.1 supporting a structural unit (2) which is flange-mounted on an internal combustion engine (1) either directly or via at least one intermediate element, with
1.2 the support of the structural unit (2) occurring at least at one point by means of a connecting means (6), with
1.3 the connecting means (6) consisting of at least three subelements (6.1, 6.2, 6.3), with
1.4 a first subelement (6.1) being connected with the structural unit (2), with
1.5 a second subelement (6.2) being connected with the internal combustion engine (1) or a support frame (3) of the internal combustion engine (1), and with
1.6 the two subelements (6.1, 6.2) being connected by a third subelement (6.3) arranged as a spring means in such a way that the connecting means (6) has a higher stiffness in at least one spatial direction than in at least one other spatial direction,
**characterized in that**
1.7 the spring means (6.3) is arranged as a leaf spring or stack of leaf springs, with
1.8 the leaf spring (6.3) of the stack of leaf springs being arranged in an L-shaped manner.

2. An apparatus according to claim 1, **characterized in that** the structural unit is arranged as a transmission (2), especially an automatic transmission.

3. An apparatus according to claim 2, **characterized in that** the transmission (2) comprises at least one hydrodynamic component, especially a hydrodynamic converter.

4. An apparatus according to claim 1, 2 or 3, **characterized in that** the structural unit (2) is flange-mounted via a flywheel casing on the internal combustion engine (1).

5. An apparatus according to one of the claims 1 to 4, **characterized in that** the internal combustion engine (1) and the structural unit (2) are connected as a common unit via three linkage points (4.1, 4.2, 4.3) with a frame of a vehicle, with the linkage points (4.1, 4.2, 4.3) being arranged on the internal combustion engine (1) and a support frame (3) which is fixedly connected with the internal combustion engine (1) on the side of the structural unit (2).

6. An apparatus according to claim 5, **characterized in that** the connecting means (6) supports the structural unit (2) on the support frame (3).

7. An apparatus according to one of the claims 1 to 6, **characterized in that** the first subelement (6.1) is detachably connected with the structural unit (2), especially by means of a screw joint.

8. An apparatus according to one of the claims 1 to 7, **characterized in that** the second subelement (6.2) is arranged integrally with the support frame (3).

9. An apparatus according to one of the claims 1 to 8, **characterized in that** the spring means (6.3) is respectively screwed together with the first subelement (6.1) and the second subelement (6.2).

10. An apparatus according to one of the claims claim 1 to 9, **characterized in that** the direction (Y) in which the leaf spring (6.3) or the stack of leaf springs is flexible and which extends perpendicular to the longitudinal direction (X) is arranged to be perpendicular to the direction (Z) of gravity when used as intended.

11. Apparatuses according to one of the claims 1 to 10, **characterized in that** the leaf spring (6.3) or the stack of leaf springs comprises recesses and/or embossed beads.

## Revendications

1. Dispositif de
1.1 soutien d'un module (2) fixé par bride sur un moteur à combustion (1) directement ou par le biais d'au moins un élément intermédiaire, dans lequel
1.2 le soutien du module est assuré par le biais d'un élément de liaison (6) au moins en un point, dans lequel
1.3 l'élément de liaison (6) est constitué d'au moins trois éléments individuels (6.1, 6.2, 6.3), dans lequel
1.4 un premier élément individuel (6.1) est relié au module (2), dans lequel
1.5 un deuxième élément individuel (6.2) est relié au moteur à combustion (1) ou à un bâti (3) du moteur à combustion (1), et dans lequel
1.6 les deux éléments individuels (6.1, 6.2) sont reliés l'un à l'autre par un troisième élément individuel (6.3) conçu comme élément élastique de telle sorte que l'élément de liaison (6) présente dans au moins une direction de l'espace une rigidité supérieure à au moins une autre direction de l'espace, **caractérisé en ce que**
1.7 l'élément élastique (6.3) est conçu comme un ressort à lames ou une pile de ressorts à lames, dans lequel
1.8 le ressort à lames (6.3) ou la pile de ressorts à lames est conçu en forme de L.

2. Dispositif selon la revendication 1, **caractérisé en ce que** le module est conçu comme transmission (2), en particulier transmission automatique.

3. Dispositif selon la revendication 2, **caractérisé en ce que** la transmission (2) présente au moins un composant hydrodynamique, en particulier un convertisseur hydrodynamique.

4. Dispositif selon la revendication 1,2 ou 3, **caractérisé en ce que** le module (2) est bridé au moteur à combustion (1) par le biais d'un carter de volant.

5. Dispositif selon l'une des revendications 1 à 4, **caractérisé en ce que** le moteur à combustion (1) et le module (2) sont reliés d'un seul tenant par le biais de trois points d'appui (4.1, 4.2, 4.3) à un cadre de véhicule, dans lequel les points d'appui (4.1, 4.2, 4.3) sont disposés sur le moteur à combustion (1) et sur un bâti (3) relié de manière permanente au moteur à combustion (1) sur le côté du module (2).

6. Dispositif selon la revendication 5, **caractérisé en ce que** l'élément de liaison (6) supporte le module (2) sur le bâti (3).

7. Dispositif selon l'une des revendications 1 à 6, **caractérisé en ce que** le premier élément individuel (6.1) est solidaire de celui du module (2) de manière amovible, en particulier par une visserie.

8. Dispositif selon l'une des revendications 1 à 7, **caractérisé en ce que** le deuxième élément individuel (6.2) est conçu d'un seul tenant avec le bâti (3).

9. Dispositif selon l'une des revendications 1 à 8, **caractérisé en ce que** l'élément élastique (6.3) est vissé au premier élément individuel (6.1) et au deuxième élément individuel (6.2) respectivement.

10. Dispositif selon l'une des revendications 1 à 9, **caractérisé en ce que** la direction (Y) s'étendant à la verticale de la direction longitudinale (X), dans lequel le ressort à lames (6.3) ou la pile de ressorts à lames est flexible, est conçue à la verticale de la direction (Z) de la force de gravité en utilisation normale.

11. Dispositifs selon l'une des revendications 1 à 10, **caractérisés en ce que** le ressort à lames (6.3) ou la pile de ressorts à lames présente des évidements et/ou des ondulations embouties.
